Europäisches Patentamt

**European Patent Office**

Office européen des brevets

(19)

(11) Veröffentlichungsnummer: **0 007 594**
**B1**

(12) EUROPÄISCHE PATENTSCHRIFT

(45) Veröffentlichungstag der Patentschrift:
**17.11.82**

(51) Int. Cl.³: **C 08 G 18/08,** C 08 G 18/32

(21) Anmeldenummer: **79102574.5**

(22) Anmeldetag: **20.07.79**

(54) Verfahren zur Herstellung von hochmolekularen, in organischen Lösungsmitteln löslichen Polyurethanen aus üblichen Ausgangsstoffen unter Mitverwendung von Bis-aminopropyl-polytetrahydrofuranen.

(30) Priorität: **26.07.78 DE 2832759**

(43) Veröffentlichungstag der Anmeldung:
**06.02.80 Patentblatt 80/3**

(45) Bekanntmachung des Hinweises auf die Patenterteilung:
**17.11.82 Patentblatt 82/46**

(84) Benannte Vertragsstaaten:
**BE DE FR GB IT**

(56) Entgegenhaltungen:
**DE-A-1 906 555**
**DE-A-2 149 836**
**DE-A-2 323 393**
**DE-A-2 500 921**
**DE-A-2 515 766**
**DE-B-1 300 278**
**DE-B-1 595 784**
**US-A-3 483 167**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Falkenstein, Georg, Dr. Chem., Im Kaestenbusch 22, D-6730 Neustadt 19 (DE)**
Erfinder: **Maempel, Lothar, Dr. Chem., Spraulache 12b, D-6831 Bruehl (DE)**
Erfinder: **Zettler, Hans Dieter, Bueckelhaube 35, D-6718 Gruenstadt 1 (DE)**
Erfinder: **Ohlinger, Rainer, Dr. Chem., Ziegelhaeusser Landstrasse 31, D-6900 Heidelberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

0 007 594

## Verfahren zur Herstellung von hochmolekularen, in organischen Lösungsmitteln löslichen Polyurethanen aus üblichen Ausgangsstoffen unter Mitverwendung von Bis-aminopropylpolytetrahydrofuranen

Die vorliegende Erfindung betrifft ein Verfahren zur Herstellung von in organischen Lösungsmitteln löslichen Polyurethanen, die bei gegebenem Feststoffgehalt eine definierte und genau reproduzierbare Lösungsviskosität aufweisen, bei welchen die Endviskosität der Reaktionsmischung durch Zusatz von Bis-aminopropyl-polytetrahydrofuran-Verbindungen relativ rasch eingestellt wird.

Es ist bekannt, langkettige, überwiegend lineare Polyurethane, eventuell in Verbindung mit bestimmten Vernetzern als Klebemittel zu verwenden. Die Polyurethane werden gewöhnlich in Granulatform geliefert und nach dem Auflösen in bestimmten Lösungsmitteln wie Methyläthylketon oder Essigsäureäthylester als Klebstoff eingesetzt. Aus klebetechnischen Gründen müssen die Lösungen dabei bei gegebenem Feststoffgehalt eine möglichst genau reproduzierbare Lösungsviskosität, d. h. die Polyurethane ein möglichst reproduzierbares Molekulargewicht, besitzen.

Die Herstellung von Polyurethanen in Lösung durch Umsetzung von organischen Polyisocyanaten mit organischen Verbindungen, die reaktive, mit Isocyanatgruppen reagierende Wasserstoffatome enthalten, gehört seit langem zum Stand der Technik. Derartige Polyurethane werden in einer Vielzahl von Anwendungsgebieten eingesetzt. Es ist jedoch vor allem im Produktionsmaßstab sehr schwierig, mit genügender Genauigkeit reproduzierbare Produkte mit gleichförmigen physikalischen Eigenschaften zu erzeugen, wenn die Ausgangsverbindungen für die Polyurethansynthese in etwa äquivalenten Mengen miteinander umgesetzt werden, d. h. bei einem NCO/OH-Verhältnis zwischen etwa 0,95 : 1 und 1,10 : 1. Die Ursache für die mangelnde Reproduzierbarkeit der Eigenschaften von Polyurethanen liegt in einer Anzahl von möglichen Nebenreaktionen, welche von schwer zu kontrollierenden Parametern abhängen.

Der wichtigste dieser Parameter ist das NCO/OH-Verhältnis selbst, welches in der Praxis nur innerhalb eines Bereiches von etwa ±1% konstant gehalten werden kann. Um genau definierte und reproduzierbare Molekulargewichte zu erhalten, ist eine Wägegenauigkeit bei der Einwaage von Polyol und Polyisocyanat erforderlich, die im Bereich von 0,1% liegt. Schon eine geringe Schwankung im NCO/OH-Verhältnis führt zu großen Änderungen in den rheologischen Eigenschaften, wie Molekulargewicht, Schmelzindex, Lösungsviskosität, Gehalt an hochvernetzten Teilchen und dadurch letztlich der Qualität der Klebstoffe.

Die Unterschiede des NCO : OH-Verhältnisse können sowohl durch Wäge- oder Dosierfehler als auch durch nicht genügende Reinheit der Reaktionspartner und der Lösungsmittel, z. B. durch Wasser, sowie durch geringe Schwankungen des Molekulargewichtes bei den Polyolen entstehen.

Um Verfahrensprodukte von einheitlicher und reproduzierbarer Qualität herzustellen, ist es daher notwendig, die Polyadditionsreaktion so zu kontrollieren, daß beim Erreichen des gewünschten Polymerisationsgrades bzw. der gewünschten Viskosität der Polyurethanlösung die Polyaddition ohne störende Nebenreaktionen beendet werden kann.

Es ist bekannt, daß man die Polyaddition durch Zusatz von monofunktionellen H-aciden Verbindungen, wie primären und sekundären Alkoholen oder Aminen, beenden kann.

So wird nach einem Verfahren, das in der DE-OS 1 595 784 beschrieben ist, zu einer Polyurethanlösung in Dimethylformamid ein primärer Alkohol zugesetzt, um die Polyadditionsreaktion abzubrechen. Um mit Alkoholen einen schnellen Kettenabbruch zu erzielen, muß man einen Alkoholüberschuß verwenden. Dies führt jedoch bei vielen Polyurethanlösungen, insbesondere bei Polyesterurethanlösungen, zu Kettenabbaureaktionen. Nach Angaben der DE-OS 1 906 555 ist zwar eine rasche Kettenabbruchreaktion durch Zusatz eines Monoamins möglich, doch ist es schwierig, genau die notwendige Menge an Monoamin zuzugeben. Ein Überschuß an Monoamin bewirkt einen Kettenabbau, ein Unterschuß dagegen einen weiteren Kettenaufbau des Polyurethans.

Zur Verhinderung des Abbaus von Polyurethanen durch überschüssiges Monoamin wird gemäß DE-OS 2 500 921 das restliche Monoamin durch Zugabe eines Monoisocyanats gebunden. Dadurch werden zwar stabile Polyurethanlösungen erhalten; nachteilig kann gegebenenfalls jedoch sein, daß durch die Bildung von katalytisch wirksamen Harnstoffen und — derivaten aus den obengenannten monofunktionellen Verbindungen die Reaktivität der Produkte in der Anwendung beeinflußt wird.

In der DE-OS 2 323 393 wird vorgeschlagen, das Reaktionsgemisch mit einem Zusatz an sekundären Alkoholen zu versehen, um die Allophanatbildung selektiv zu unterdrücken. Man erreicht dabei zwar eine geringere, aber für viele Anwendungsgebiete noch zu große Streubreite der Viskosität der Polyurethan-Lösungen bei Schwankungen des NCO/OH-Verhältnisses bei ca. 4%.

In der US-PS 3 310 533 wird vorgeschlagen, die Polymerisationsreaktion durch Ausgießen und rasches Abkühlen des Reaktionsgemisches vorzeitig abzubrechen. Aber auch dieses Verfahren ist ungeeignet, Polyurethane mit definierten Molekulargewichten herzustellen, da die Polyadditionsprodukte noch reaktive NCO-Gruppen aufweisen, die bei der Lagerung unter Molekularvergrößerung abreagieren.

Aus der DE-AS 1 694 127 ist außerdem bekannt, zur Verminderung des Molekulargewichtes bzw. um — trotz einer gewissen Molekülverzweigung — noch lösliche Polyurethane zu erhalten, monofunktionelle Verbindungen in untergeordneten Mengen (bezogen auf den NCO-Gehalt)

2

mitzuverwenden, z. B. Butylamin, Butylsemicarbazid oder N;N'-Dimethylhydrazin. Dies führt jedoch zwangsweise zu hohen Schwankungen in den Endviskositäten der Polyurethan-Lösungen. Ferner wird in der DE-PS 1 157 386 vorgeschlagen, bei zu niederem Molekulargewicht des Polyurethans bzw. Polyharnstoffurethans durch vorsichtige Zugabe weiterer — vorzugsweise weniger reaktiver aliphatischer Di- oder Triisocyanate — die gewünschte Lösungsviskosität einzustellen. Nach Erreichen der gewünschten Viskosität kann man zur Stabilisierung die Endgruppen des Polyurethans mit Monoisocyanaten, z. B. Butylisocyanat, Anhydriden oder anderen acylierend wirkenden Substanzen, wie z. B. Säurechloriden, umsetzen. Nachteilig bei dieser Arbeitsweise ist neben der umständlichen Fahrweise die Tatsache, daß hierbei die Viskositätseinstellung sehr langsam vonstatten geht und die Abbruchreaktion mit den Endgruppen nicht augenblicklich erfolgt, so daß sich keine exakt kontrollierbare Viskosität einstellen kann.

In organischen Lösungsmitteln lösliche Polyurethane werden gemäß DE-AS 1 300 278 aus Hydroxylendgruppen aufweisenden Polyestern oder Polyesteramiden, organischen Diisocyanaten und Wasser in definierten Mengenverhältnissen hergestellt, wobei der Reaktionslösung nach Erreichen einer Viskosität von 1 bis 1500 Pa · s bei 25°C zur Absättigung der NCO-Gruppen äquivalente Mengen einer mono- oder polyfunktionellen Hydroxyl- und/oder Amminogruppen enthaltenden Verbindung einverleibt wird. Entgegen den Ausführungen in der Anmeldebeschreibung läßt sich das Verfahren bei Verwendung von niedermolekularen aliphatischen und/oder aromatischen Diaminen nicht durchführen, da hierbei stark vernetzte, gallertartige unlösliche Produkte erhalten werden.

Nach Angaben der DE-OS 2 149 836 und 2 515 766 werden hochmolekulare, lösliche isocyanatgruppenfreie Polyurethane nach mehrstufigen Verfahren hergestellt. Gemäß DE-OS 2 149 836 werden die Ausgangskomponenten bei einer Temperatur zwischen 100°C und 160°C bei Gegenwart eines unpolaren oder schwach polaren Lösungsmittels unter ständiger Viskositätskontrolle bis zum Erreichen eines Viskositätsmaximums eingesetzt. In der zweiten Stufe wird die Reaktionsmischung bei Temperaturen zwischen 60°C und 100°C so lange nachreagieren gelassen — ungefähr 12 bis 72 Stunden — bis keine NCO-Gruppen mehr nachweisbar sind.

Durch die Optimierung des Temperaturverlaufs der Lösungspolyaddition kann gemäß DE-OS 2 515 766 die Reaktionszeit verringert werden. Die Nachteile dieser Verfahren sind in den langen Reaktions- bzw. Nachreaktionszeiten und den damit verbundenen Kosten sowie in der Tatsache zu sehen, daß der Viskositätsaufbau der Reaktionslösung zwar kontrolliert, nicht jedoch gesteuert werden kann. Die nach Austemperung der Reaktionslösung und Abtrennung der Lösungsmittel sich einstellende Lösungsviskosität der Polyurethane nach Wiederauflösung der Granulate ist nach wie vor wie bei der Substanzpolyaddition von der Genauigkeit der Einwaage der Ausgangsstoffe abhängig, wobei — wie bereits dargelegt wurde — geringe Ungenauigkeiten in der Einwaage zu Polyurethanen mit unterschiedlichen Eigenschaften und Lösungsviskositäten führen. ·

Aufgabe der vorliegenden Erfindung war es Polyurethane herzustellen, die nach Wiederauflösen der Polyurethangranulate in vorzugsweise polaren organischen Lösungsmitteln Lösungen ergeben, die bei gegebener Temperatur und gegebenem Feststoffgehalt eine definierte und genau reproduzierbare Lösungsviskosität besitzen. Durch geeignete Steuerung der Lösungspolyaddition sollten die Reaktionszeiten verkürzt werden, ohne daß dadurch die reproduzierbare Einstellung der gewünschten Lösungsviskositäten beeinträchtigt wird. .

Diese Aufgabe wird gelöst durch ein Verfahren zur Herstellung von hochmolekularen, in organischen Lösungsmitteln löslichen Polyurethanen aus organischen Diisocyanaten, Dihydroxyverbindungen, Katalysatoren und gegebenenfalls Kettenverlängerungsmitteln und Zusatzstoffen, das dadurch gekennzeichnet ist, daß man

a) das organische Diisocyanat, die Dihydroxyverbindung und gegebenenfalls das Kettenverlängerungsmittel in einem NCO- : OH-Gruppen-Verhältnis von 1,02 bis 1,18 : 1 in Gegenwart von Katalysatoren und in unter den Reaktionsbedingungen inerten organischen Lösungsmitteln umsetzt, wobei der Reaktionsmischung gegebenenfalls zusätzliches Lösungsmittel einverleibt wird, bis die Reaktionsmischung einen NCO-Gehalt von 0,02 bis 0,2 Gewichtsprozent, bezogen auf das Gesamtgewicht, aufweist.
b) der Reaktionsmischung danach eine Bis-aminopropyl-polytetrahydrofuran-Verbindung in einer solchen Menge einverleibt, daß der Gehalt an Aminogruppen maximal der Menge an Isocyanatgruppen, die am Ende der Reaktionsstufe (a) nicht umgesetzt wird, äquivalent ist,
c) die Reaktionsmischung in Form einer 30 bis 60 gewichtsprozentigen Lösung bis zu einer Endviskosität von 100 bis 800 Pa · s gemessen bei 105°C kondensiert und
d) nach Erreichen der Endviskosität den gegebenenfalls noch verbleibenden NCO-Gehalt mit einer ungefähr äquivalenten Menge eines Monoamins absättigt, so daß der verleibende Rest-NCO-Gehalt der Reaktionsmischung 0 bis 0,005 Gewichtsprozent beträgt.

Durch die Verwendung von Bis-aminopropyl-polytetrahydrofuran-Verbindungen, vorzugsweise solchen mit Molekulargewichten von 750 bis 2200, insbesondere von 880 bis 1150, als zusätzliches Kettenverlängerungsmittel in der zur Einstellung der gewünschten Viskosität benötigten Menge kann die Polyaddition gesteuert und die Reaktionszeit erheblich verkürzt werden. Überraschend war ferner, daß die hochmolekularen Bis-aminopropyl-polytetrahydrofuran-Verbindungen problemlos den NCO-gruppenhaltigen Polyurethan-Lösungen einverleibt werden können; die Bildung von unlöslichen Stippen und gallertigen Massen, wie sie bei Zugabe von niedermolekularen Diaminen erhalten werden, wurden nicht beobachtet. Durch die portionsweise Zugabe der speziellen Bis-aminopropyltetrahydrofurane kann beispielsweise der NCO-Gehalt der Reaktionsmischung von 0,08 Gewichtsprozent auf 0,02 Gewichtsprozent in ungefähr 40 Minuten gesenkt werden, wobei die Viskosität der Reaktionslösung, gemessen bei 100°C von ungefähr 35 auf 500 Pa · s ansteigt. Der NCO-Gehalt der Reaktionsmischung fällt dabei entsprechend der zugesetzten Menge Bis-aminopropyl-polytetrahydrofuran-Verbindung ab. Die Viskositätserhöhung erfolgt wegen der schnellen Reaktion der Bis-aminopropyl-polytetrahydrofuran-Verbindung mit noch vorhandenen Isocyanatgruppen augenblicklich.

Nach Erreichen der gewünschten Endviskosität wird der noch verbleibende NCO-Gehalt mit Monoaminen vollständig bzw. nahezu vollständig umgesetzt, so daß der letztlich noch verbleibende Rest-NCO-Gehalt 0 bis 0,005 Gewichtsprozent, bezogen auf das Gewicht der Reaktionsmischung beträgt.

Ein anderer Vorteil des erfindungsgemäßen Verfahrens liegt in der Möglichkeit unabhängig von geringen Schwankungen im Einsatzstoffverhältnis der Ausgangskomponenten durch die Verwendung der Bis-aminopropyl-polytetrahydrofuren-Verbindungen die Viskosität der Reaktionsmischung steuern zu können und gleichzeitig längere Temperzeiten zur Ausreaktion der Reaktionsmischung zu vermeiden.

Die Steuerung der Viskosität der Reaktionsmischung, die nach den bisher bekannten Verfahren nicht möglich ist, ermöglicht die reproduzierbare Herstellung von Produkten mit definierter Lösungsviskosität.

Als Ausgangsstoffe für die Herstellung der hochmolekularen, in organischen Lösungsmitteln löslichen Polyurethane werden die üblichen organischen Diisocyanate, Dihydroxyverbindungen, Kettenverlängerungsmittel, Katalysatoren, organische Lösungsmittel und Zusatzstoffe verwendet.

Als organische Diisocyanate sind für das erfindungsgemäße Verfahren die aus der Polyurethanchemie bekannten Verbindungen geeignet. Es können sowohl aliphatische, cycloaliphatische, araliphatische, heterocyclische als auch vorzugsweise aromatische Diisocyanate verwendet werden. Beispielhaft genannt seien aliphatische Diisocyanate wie Äthylendiisocyanate, Äthyliden-diisocyanat, Propylen-1,2-diisocyanat, 1,4-Butylen-diisocyanat, 1,6-Hexamethylen-diisocyanat, 1,8-Octamethylendiisocyanat, cycloaliphatische Diisocyanate, wie Hexahydrotoluylen-2,4- und 2,6-diisocyanat und Mischungen dieser beiden Isomeren, 4,4′-Dicyclohexylmethan-diisocyanat, Cyclohexan-1,4-diisocyanat, Cyclohexan-1,3-diisocyanat, 1-Isocyanato-3,3,5-trimethyl-5-isocyanatomethylcyclohexan, araliphatische Diisocyanate wie 1,3- und 1,4-Xylylendiisocyanat, 4,4′-Phenyl-cyclohexylmethan-diisocyanat und aromatische Diisocyanate wie Toluylen-2,4- oder -2,6-diisocyanat und Mischungen dieser Isomeren, Phenylen-1,4-diisocyanat, Diphenylmethan-4,4′-diisocyanat, Diphenyläther-4,4′-diisocyanat und Naphthylen-1,5-diisocyanat. Auch Esterdiisocyanate von Carbonsäuren wie sie beispielsweise in den englischen Patentschriften 965 474 und 1 072 956 beschrieben sind, können ebenfalls als Diisocyanate im erfindungsgemäßen Verfahren Verwendung finden.

Vorzugsweise verwendet werden 2,4- und 2,6-Toluylen-diisocyanat sowie die technischen Isomerengemische davon, 2,2′- 2,4′- und 4,4′-Diphenylmethan-diisocyanat sowie Isomerenmischungen davon, Phenylen-diisocyanate, Hexamethylen-diisocyanat-1,6, 2,2,4-Trimethyl-hexan-diisocyanat und 3-Isocyanatomethyl-3,5,5-trimethylcyclohexyl-isocyanat.

Als Dihydroxyverbindungen kommen vorzugsweise Polyätherole und insbesondere Polyesterole in Betracht. Verwendet werden können jedoch auch andere hydroxylgruppenhaltige Polymere, beispielsweise Polycarbonate, insbesondere solche, hergestellt durch Umesterung von Diphenylcarbonat mit Hexandiol-1,6, Polyoxymethylene, Polyesteramide, Polyätherpolyurethane und Polyesterpolyurethane. Die Dihydroxyverbindungen besitzen Molekulargewichte von 400 bis 5000, vorzugsweise von 1000 bis 4000.

Geeignete difunktionelle Polyesterole die zweckmäßigerweise ein Molekulargewicht von 500 bis 5000, vorzugsweise 800 bis 2500 besitzen, können aus geradkettigen Alkandicarbonsäuren mit 4 bis 12, vorzugsweise 4 bis 6 Kohlenstoffatomen im Alkylenrest, wie Pimelinsäure, Korksäure, Azelainsäure, Sebacinsäure, Dodecan-disäure und vorzugsweise Bernstein-, Glutar- und Adipinsäure und Alkandiolen mit 2 bis 10, vorzugsweise 2 bis 6 Kohlenstoffatomen, wie Pentandiol-1,5, Octandiol-1,6, Decandiol-1,10 und vorzugsweise Äthylenglykol, Butandiol-1,4 und Hexandiol-1,6 sowie geradkettigen Hydroxylalkanmonocarbonsäuren mit mindestens 5 Kohlenstoffatomen oder ihren Lactonen hergestellt werden.

Polyesterole aus Adipinsäure und Hexandiol-1,6 und/oder Butandiol-1,4 sowie aus E-Caprolacton mit Molekulargewichten von 300 bis 3000 sind besonders geeignet und werden deshalb vorzugsweise verwendet.

Anstelle von Polyesterolen oder im Gemisch mit diesen können auch Polyätherole mit einem Molekulargewicht von etwa 400 bis 5000, vorzugsweise 1000 bis 4000, zur Anwendung gelangen.

Beispielsweise kommen Polyätherole in Betracht, die durch Polyalkoxylierung von vorzugsweise zweiwertigen Alkoholen, wie Äthylenglykol, Propylenglykol-1,3, Butandiol-1,4 und Hexandiol-1,6 mit

4

Äthylenoxid und/oder Propylenoxid hergestellt werden. Auch Mischungen aus verschiedenen hydroxylgruppenhaltigen Polyalkylenoxiden, beispielsweise solche hergestellt aus Alkoholmischungen durch Anlagerung von Äthylenoxid und/oder Propylenoxid können verwendet werden.

Als Dihydroxyverbindungen seien ferner hydroxylgruppenhaltige Polyätherurethane und/oder Polyesterurethane genannt. Derartige Produkte werden durch Umsetzung von niedermolekularen Diolen und/oder Polyester- und/oder Polyätherolen mit Molekulargewichten von ungefähr 2000 bis ungefähr 5000 mit einem Überschuß an Diisocyanaten nach bekannten Verfahren hergestellt. Als zweckmäßig hat es sich hierbei erwiesen, die Hydroxylverbindungen und Diisocyanate in solchen Mengen zu verwenden, daß pro NCO-Gruppe 1,1 bis 2 Hydroxylgruppen in der Reaktionsmischung vorliegen.

Als gegebenenfalls mitzuverwendende Kettenverlängerungsmittel, die pro Molekül mindestens zwei mit Isocyanatgruppen reaktionsfähige Wasserstoffatome enthalten, eignen sich für das erfindungsgemäße Verfahren niedermolekulare Diole und/oder sterisch gehinderte aliphatische und/oder cycloaliphatische Diamine und/oder sec. Diamine mit einem Molekulargewicht von nicht mehr als 400, vorzugsweise 60 bis 300, und/oder Wasser bzw. wasserabspaltende Mittel.

Als niedermolekulare Diole kommen geradkettige oder verzweigte aliphatische Diole mit 2 bis 20 Kohlenstoffatomen oder cycloaliphatische Diole in Frage, wie z. B. Äthanol-1,2, Propandiol-1,3, Propandiol-1,2, Butandiol-1,4, Butandiol-1,3, Hexandiol-1,6, Decandiol-1,10, Neopentylglykol und Cyclopentandiol; außerdem eignen sich als Kettenverlängerungsmittel beispielsweise Hexendiol-1,6, Butindiol-1,4, Diäthylenglykol, Hydroxypivalinsäureneopentylglykolester, Mercaptoäthanol, Methyldiäthanolamin und N,N'-Di-(hydroxyneopentyl)-piperazin.

Geeignete Diamine sind z. B. 3,3'-Dimethyl-4,4'-diaminodicyclohexylmethan, 4,4'-Di-methylaminocyclohexylmethan und N,N'-Dimethyläthylendiamin.

Die Diole bzw. Diamine werden zweckmäßigerweise in Mengen von bis zu 60, vorzugsweise 1,5 bis 40 Gewichtsprozent, bezogen auf das Gesamtgewicht von Dihydroxyverbindung und Kettenverlängerungsmittel mitverwendet.

Als gegebenenfalls mitzuverwendende mehrfunktionelle Alkohole kommen z. B. Trimethylolpropan oder Glycerin in Frage; diese sollten jedoch in weniger als 15 Äquivalentprozent, bevorzugt unter 7 Äquivalentprozent, bezogen auf Dihydroxyverbindung und Kettenverlängerungsmittel, verwendet werden.

Für das erfindungsgemäße Verfahren sind die Dihydroxyverbindungen und gegebenenfalls Kettenverlängerungsmittel und organischen Diisocyanate in solchen Mengen einzusetzen, daß das Verhältnis der mit Isocyanatgruppen reaktionsfähigen Wasserstoffatome der Dihydroxyverbindungen und gegebenenfalls Kettenverlängerungsmittel zu Isocyanatgruppen 1 : 1,02 bis 1,18, vorzugsweise 1 : 1,05 bis 1,1 beträgt.

Erfindungsgemäß werden zur Einstellung der Endviskosität der Reaktionsmischung die NCO-gruppenhaltige Polyurethane mit Bis-aminopropylpolytetrahydrofuranen mit Molekulargewichten von 750 bis 2200, vorzugsweise von 880 bis 1150 umgesetzt.

Die Bis-aminopropyl-polytetrahydrofurane, die in Struktur und Molekulargewicht den Dihydroxyverbindungen entsprechen bzw. zumindest sehr ähnlich sind, so daß der molekulare Aufbau der Polyurethane nicht gestört wird, können beispielsweise durch Anlagerung von Acrylnitril an die Hydroxylgruppen von Polytetrahydrofuran mit den entsprechenden Molekulargewichten und anschließender Hydrierung der Nitrilgruppe erhalten werden. Die Bis-aminopropyl-polytetrahydrofurane werden der NCO-gruppenhaltigen Reaktionsmischung der Reaktionsstufe a), sobald diese einen NCO-Gehalt von 0,02 bis 0,2 Gewichtsprozent, vorzugsweise von 0,05 bis 0,1 Gewichtsprozent aufweist, in einer solchen Menge einverleibt, das der Gehalt an Aminogruppen maximal der Menge an Isocyanatgruppen äquivalent ist.

Zur Absättigung der gegebenenfalls noch verbleibenden freien NCO-Gruppen werden der Reaktionsmischung nach Erreichen der gewünschten Endviskosität Monoamine einverleibt. Geeignet sind beispielsweise aliphatische, cycloaliphatische und aromatische primäre und/oder vorzugsweise sekundäre Monoamine, wie z. B. Dimethylamin, Methyläthylamin, Diäthylamin, Dipropylamin, Dibutylamin, n-Propylamin, Octylamin, Diisopropylamin, Äthylbutylamin, 1,1-Dimethylpropylamin, Tridecylamin, 2-Methoxyäthylamin, Di-2-methoxyäthylamin, Cyclohexylamin, N-Monomethylcyclohexylamin, Dicyclohexylamin, 2-Methylcyclohexylamin, Norbornylamin, Anilin, Benzylamin, Toluidin, Dibromanilin, Äthylphenylamin, 2-Amino-1-dimethylaminoäthan, Monomethyläthanolamin, Diäthanolamin, Monoisopropanolamin usw. Besonders geeignet sind sekundäre aliphatische und/oder cycloaliphatische Amine wie z. B. Dibutylamin, Diäthylamin, Propylbutylamin und Dicyclohexylamin sowie n-Octylamin. Desgleichen eignen sich Gemische dieser Monoamine.

Ein Überschuß an Monoamin ist wegen des dabei eintretenden Kettenabbaus bzw. einer Viskositätsabnahme zu vermeiden.

Als organische, gegenüber den Diisocyanaten, Dihydroxyverbindungen, gegebenenfalls Kettenverlängerungsmitteln und Bis-aminopropyl-polytetrahydrofurane indifferente Lösungsmittel für Polyurethane kommen unpolare oder schwach polare Polyurethanlösungsmittel in Frage, wie beispielsweise Äther, cyclische Äther, Ketone, Ätherester, gegebenenfalls halogenhaltige aliphatische und cycloaliphatische Kohlenwasserstoffe, Schwefelkohlenstoff und Aromaten. Im einzelnen seien beispielhaft genannt: Äther, wie Diisopropyläther und Di-n-butyläther, cyclische Äther, wie Dioxan und Tetrahydrofuran, Ketone, wie Cyclohexanon, Ätherester, wie Äthylglykolacetat, gegebenenfalls halogenhaltige Kohlenwasserstoffe, wie n-Hexan, Cyclohexan, Tetrachlorkohlenstoff und Aromaten, wie Xylol, Toluol und Benzol.

Der Lösungsmittelgehalt der erfindungsgemäß hergestellten Polyurethane kann in weiten Grenzen schwanken und beträgt im allgemeinen zwischen 90 und 40 Gewichtsprozent, vorzugsweise 70 bis 60 Gewichtsprozent, bezogen auf das Gesamtgewicht.

Zur Verkürzung der Reaktionszeit der Polyurethanherstellung können die an sich bekannten Katalysatoren verwendet werden. Genannt seien beispielsweise Eisen(III)-chlorid, Eisen(II)-acetylacetonat, Dibutylzinn-dilaurat, Zinnoctoat und ähnlich gebaute Verbindungen der Metalle Nickel, Kobalt und Zink sowie tertiäre Amine, wie Triäthylendiamin oder Triäthylamin. Die Katalysatoren kommen beispielsweise in Mengen von 0,0001 bis 0,01 Gewichtsprozent, vorzugsweise von 0,0001 bis 0,001 Gewichtsprozent, bezogen auf das Gewicht der Dihydroxyverbindungen, zur Anwendung.

Zur erfindungsgemäßen Herstellung der hochmolekularen in organischen Lösungsmitteln löslichen Polyurethane kann z. B. folgendermaßen verfahren werden.:

Organische Diisocyanate, Dihydroxyverbindungen, gegebenenfalls Kettenverlängerungsmittel und Katalysator werden 10 bis 60 prozentig, vorwiegend 30 bis 40 prozentig in dem inerten organischen Lösungsmittel in das Reaktionsgefäß eingewogen und auf 30 bis 130°C, vorzugsweise 80° bis 110°C, insbesondere ungefähr 100°C erwärmt. Im Laufe der Reaktion, die durch das Ansteigen der Viskosität ersichtlich ist, wird die Viskosität der Reaktionsmischung gegebenenfalls durch kontinuierliche Zugabe von Lösungsmittel so gesteuert, daß die Reaktionslösung noch gut gerührt werden kann und eine optimale Umsetzungsgeschwindigkeit erreicht wird.

Der bevorzugte Viskositätsbereich der Reaktionsmischung beträgt 20 bis 100 Pa · s bei einer Reaktionstemperatur von 100°C. Der NCO-Gehalt der Reaktionsmischung sinkt dabei auf 0,02 bis 0,2 Gewichtsprozent, vorzugsweise 0,05 bis 0,1 Gewichtsprozent, bezogen auf das Gesamtgewicht, in 4 bis 7 Stunden, vorzugsweise 5 bis 6 Stunden.

Danach erfolgt der weitere Aufbau des hochmolekularen Polyurethans durch vorzugsweise portionsweise Zugabe von Bisaminopropyl-polytetrahydrofuran-Verbindungen in einer Menge, die maximal äquivalent ist dem Gehalt an NCO-Gruppen in der Reaktionsmischung. Diese Reaktionsstufe zeichnet sich aus durch eine rasche Viskositätserhöhung und Abnahme des NCO-Gehalts bei konstantem Lösungsmittelgehalt, wobei sich die Reaktionsgeschwindigkeit ständig verringert.

Sobald die Reaktionsmischung in Form einer 30 bis 60 gewichtsprozentigen Lösung die gewünschte Endviskosität von 100 bis 800 Pa · s, vorzugsweise von 300 bis 400 Pa · s, gemessen bei 105°C, erreicht hat — hierzu sind Gesamtreaktionszeiten von ungefähr 4 bis 10 Stunden, vorzugsweise von 5 bis 7 Stunden, erforderlich — wird der noch verbleibende NCO-Gehalt der Reaktionsmischung mit einer ungefähr äquivalenten Menge eines Monoamins abgesättigt. Der verbleibende Rest-NCO-Gehalt der Reaktionsmischung beträgt 0 bis 0,005.

Aus den auf diese Weise hergestellten Polyurethanlösungen können durch Abtrennung des Lösungsmittels lagerstabile und in polaren Lösungsmitteln lösliche Polyurethane hergestellt werden. Das Lösungsmittel wird hierzu zweckmäßigerweise bei Temperaturen von 100°C bis 150°C und unter vermindertem Druck abdestilliert. Hierzu können die üblichen Vorrichtungen, beispielsweise Entgasungsextruder oder -kneter verwendet werden.

Die nach dem erfindungsgemäßen Verfahren hergestellten Polyurethanlösungen besitzen bei Feststoffgehalten von 5 bis 30 Gewichtsprozent, Viskositäten von 0,5 bis 40 Pa · s gemessen bei 25°C und Rest-NCO-Gehalte von 0 bis 0,005 Gewichtsprozent.

Die aus diesen Lösungen hergestellten Polyurethan-Granulate sind lagerstabil, besitzen einen Rest-NCO-Gehalt von ebenfalls 0 bis 0,005 Gewichtsprozent und sind in polaren organischen Lösungsmitteln gut löslich.

Die erfindungsgemäß hergestellten Polyurethane eignen sich zur Anwendung als Beschichtungsmittel und insbesondere als Klebstoffe.

## Beispiel 1

In 100 g Toluol werden 830 g (0,34 Mol) eines Polyesters aus Adipinsäure und Butandiol-1,4 mit einer OH-Zahl von 46, 63,2 g (0,36 Mol) Toluylendiisocyanat (Gewichtsverhältnis von 2,4- : 2,6-Isomeren 80 : 20) und 12 mg Eisenacetylacetonat gelöst und bei 100°C zur Reaktion gebracht. Das NCO : OH-Verhältnis beträgt somit 1,06.

Nach einer Reaktionszeit von 7 Stunden unter kontinuierlicher Zugabe von 2000 g Toluol besaß die Reaktionslösung eine Viskosität von 15 Pa · s/100°C und einen NCO-Gehalt von 0,05%. Gelöst in 33,7 g Toluol wurden dann 16,3 g des Bis-aminopropyl-polytetrahydrofuran (Molekulargewicht 1142) innerhalb 20 Minuten zugegeben. Der NCO-Gehalt fiel dabei auf 0,02% ab, die Viskosität stieg auf 90 Pa · s/100°C an.

Der Rest-NCO-Gehalt von 0,02% wurde mit 1,1 g n-Octylamin auf 0,004% abgesenkt.

Anschließend wurde das Toluol bei 100°C bis 110°C unter vermindertem Druck abdestilliert.

Das erhaltene Produkt besaß eine Viskosität von 7 Pa · s in einer 15prozentigen Methyläthylketonlösung bei Raumtemperatur.

Mit diesem Produkt durchgeführte Verklebungen ergaben folgende Klebwerte gemessen nach DIN 53 273:

| Verklebungen (Noratestgummi*)/Noratestgummi) | Beispiel 1 | Handelsprodukt[1]) |
|---|---|---|
| Scherfestigkeit nach DIN 53273 (N/cm$^2$) | | |
| ohne Triphenylmethan-triisocyanat | 178 | 186 |
| mit 5% Triphenylmethan-triisocyanat | 231 | 212 |
| Schälfestigkeit nach DIN 53273 (N/cm) | | |
| ohne Triphenylmethan-triisocyanat | 16 | 21 |
| mit 5% Triphenylmethan-triisocyanat | 80 | 75 |
| Offene Zeit (Min.) | | |
| nach Klebstoffauftrag | 81 | 32 |
| nach Aktivierung | 48 | 34 |

*) Hersteller: Firma Freudenberg, Weinheim.
[1]) Aus Butandiol-1,4-adipat und Toluylendiisocyanat.

### Beispiel 2

840 g (0,34 Mol) eines Polyestergemisches mit einer OH-Zahl von 45,8 auf Basis von Polyestern aus Adipinsäure und Diäthylenglykol und Adipinsäure und Äthylenglykol, 65,7 g (0,37 Mol) Toluylendiisocyanat (Gewichtsverhältnis von 2,4- : 2,6-Isomeren 80 : 20) und 24 mg Eisenacetylacetonat werden in 200 g Toluol gelöst und bei 100° C umgesetzt. Das NCO : OH-Verhältnis beträgt somit 1,1.

Nach einer Reaktionszeit von 7 Stunden unter kontinuierlicher Zugabe von 1158 g Toluol besaß die 40 Gewichtsprozentige Reaktionslösung eine Viskosität von 26 Pas bei 100° C und einen NCO-Gehalt von 0,078%.

Zu 1218 g dieses Reaktionsgemisches wurden 30 ml einer Lösung von 12,17 g Bis-aminopropyl-polytetrahydrofuran (Molekulargewicht 1442) in 25 ml Toluol hinzugegeben.

Die Viskosität der 40 gew.-%igen Lösung stieg dabei innerhalb von 20 Minuten auf 350 Pa · s bei 105° C an, der NCO-Restgehalt betrug 0,027%. Mit 0,92 g n-Octylamin wurde dieser Rest-NCO-Gehalt auf 0,005% abgesenkt und das Lösungsmittel anschließend bei 100–110° C unter vermindertem Druck abgetrennt. .

Das erhaltene Polyurethan konnte zu einer klaren und gelkörperfreien 15prozentigen Lösung in Methyläthylketon gelöst werden. Die Lösungsviskosität betrug 1,9 Pa · s bei Raumtemperatur.

Mit diesem Produkt durchgeführte Verklebungen ergaben folgende Klebewerte:

|  | | Beispiel 2 | Markt-produkt[2] |
|---|---|---|---|
| a) | Einseitige Verklebung (Polyäthylen-Sackfolie) | | |
| | 15prozentige Lösung in Äthylacetat | 100 | 100 |
| | ®Elastostic Härter OS 3173 | 7 | 7 |
| | Schälfestigkeit nach DIN 53273 (N/cm Probenbreite) | | |
| | Raumtemperatur | 6,9 | 6,0 |
| | +40°C | 8,0 | 2,0 |
| | −20°C | 1,8 | 3,0 |
| b) | Zweiseitige Verklebung (Polyäthylen-Sackfolie) | | |
| | 15prozentige Lösung in Äthylacetat | 70 | 70 |
| | Äthylacetat | 30 | 30 |
| | ®Elastostic Härter DS 2172 | 6 | 6 |
| | Schälfestigkeit nach DIN 53273 | | |
| | Raumtemperatur | 2,4 | 2,3 |
| | +40°C | 2,0 | 1,0 |
| | −20°C | 2,3 | 1,9 |

®Elastostic-Härter sind Handelsprodukte der Elastogran GmbH, 2844 Lemförde, Deutschland. Elastostic-Härter sind Reaktionsprodukte aus Trimethylolpropan-Toluylendiisocyanat-Addukten und Ethylenglykol-Diethylenglykol-Butandiol-1,4-Adipaten.

[2] Aus Diethylenglykoladipat/Ethylenglykoladipat und Toluylendiisocyanat.

## Beispiel 3

810 g (0,31 Mol) eines Polyesters auf Basis Adipinsäure/Hexandiol mit einer OH-Zahl von 43,1 und 16,2 g (0,18 Mol) Butandiol-1,4 werden mit 132,8 g (0,53 Mol) 4,4'-Diphenylmethandiisocyanat in 300 g Toluol bei 100°C zur Reaktion gebracht. Das NCO : OH-Verhältnis betrug 1,08. Während 6 Stunden werden zusätzlich 1926 g Toluol, in denen 12 mg Eisenacetylacetonat gelöst waren, zur Verdünnung der Reaktionslösung zugegeben. Die 30 gew.-%ige Lösung besaß dann eine Viskosität von 30 Pa · s und einen NCO-Gehalt von 0,05%.

607 g dieser Reaktionslösung werden mit 4,1 g Bis-aminopropyl-polytetrahydrofuran (Molekulargewicht 1150) und 47 mg n-Octylamin versetzt. Die Viskosität stieg dabei auf 220 Pa · s/100°C oder 203 Pa · s/105°C an. Der Rest-NCO-Gehalt betrug 0,005%. Nach Abtrennung des Lösungsmittels und Wiederauflösung in Methyläthylketon besaß die klare und gelkörperfreie Lösung eine Viskosität von 8,5 Pa · s.

## Vergleichsbeispiel

612 g der Reaktionslösung nach Beispiel 3 wurden mit 4,4 g Bis-aminopropyl-polytetrahydrofurans versetzt. Die Viskosität stieg dadurch auf 210 Pa · s/100°C. Der NCO-Gehalt betrug vor Abtrennung des Lösungsmittels 0,01%. Nach Abtrennung des Lösungsmittels konnte das Produkt zu einer gelkörperfreien 15 prozentigen Lösung in Methyläthylketon gelöst werden. Die Viskosität dieser Lösung betrug 17 Pa · s. Der NCO-Gehalt von 0,01% bewirkte eine Vergrößerung des Molekulargewichts und damit verbunden eine Verdoppelung der Viskosität.

Mit diesen Produkten durchgeführte Verklebungen ergaben folgende Werte:

| Verklebung (Noratestgummi/Noratestgummi) | Beispiel 3 | Vergleichs-beispiel | Handels-produkt[3] |
|---|---|---|---|
| Scherfestigkeit nach DIN 53273 (N/cm$^2$) | | | |
| ohne Triphenylmethan-triisocyanat | 176 | 184 | 189 |
| Schälfestigkeit nach DIN 53273 (N/cm) | | | |
| ohne Triphenylmethan-triisocyanat | 26 | 22 | 14 |
| Offene Zeit (min) | | | |
| nach Klebstoffauftrag | 31 | 32 | 30 |
| nach Aktivierung | 40 | 40 | 45 |
| Aussehen der Lösung | wenig trüb | wenig trüb | wenig trüb |

[3]) Aus Hexandioladipat, Butandiol-1,4 und 4,4'-Diphenylmethandiisocyanat.

## Beispiel 4

840 g (0,32 Mol) eines Polyesters auf Basis Adipinsäure/Hexandiol mit einer OH-Zahl von 43,1 werden gelöst in 100 g Toluol bei 100°C mit 60 g (0,34 Mol) Toluylendiisocyanat (Gewichtsverhältnis von 2,4- : 2,6-Isomeren 80 : 20) umgesetzt. Das NCO : OH-Verhältnis beträgt 1,06. Nach einer Reaktionszeit von 7 Stunden unter kontinuierlicher Zugabe von 470 g Toluol, die mit 24 mg Eisenacetylacetonat versetzt waren, betrug die Viskosität der Reaktionsmischung 22 Pa · s und der NCO-Gehalt 0,03%.

Zu 570 g dieser Reaktionsmischung wurden bei 100°C, 2,32 g Bis-aminopropyl-polytetrahydrofuran (MG 1150) gelöst in 25 g Toluol zugegeben. Die Viskosität stieg dadurch auf 75 Pa · s an. Der NCO-Gehalt lag bei 0,008%. Zur weiteren Absenkung des Rest-NCO-Gehaltes wurden 0,14 g n-Octylamin zugegeben. Ein NCO-Gehalt konnte danach nicht mehr festgestellt werden.

Nach Abtrennung des Lösungsmittels und Wiederauflösung des Polyurethans besaß die gelkörperfreie 15% Methyläthylketonlösung eine Viskosität von 4 Pa · s bei Raumtemperatur.

Mit diesem Produkt durchgeführte Verklebungen ergaben folgende Klebewerte:

| Verklebungen (Noratestgummi/Noratestgummi) | Beispiel 4 | Handelsprodukte[4] | |
|---|---|---|---|
| Scherfestigkeit nach DIN 53273 (N/cm²) | | | |
| ohne Triphenylmethan-triisocyanat | 207 | 149 | 109 |
| mit 5% Triphenylmethan-triisocyanat | 207 | 132 | 153 |
| Schälfestigkeit nach DIN 53273 (N/cm) | | | |
| ohne Triphenylmethan-triisocyanat | 25 | 8 | 13 |
| mit 5% Triphenylmethan-triisocyanat | 60 | 21 | 45 |
| Viskosität (mPa · s) 15% Methyl-äthylketon | 375 | 575 | 350 |
| Brookfield-Spindel 3/Stufe 20 | | | |
| Offene Zeit (min) | | | |
| nach Klebstoffauftrag | 7 | 6 | 5 |
| nach Aktivierung | 13 | 13 | 10 |
| Aussehen der Lösung | klar | trüb | klar |

[4] Aus Hexandioladipat und Toluylendiisocyanat (unterschiedliche Produktionschargen).

## Beispiel 5

270 g (0,11 Mol) eines Polyesters auf Basis Adipinsäure Butandiol-1,4 mit einer OH-Zahl von 45,6 wurden zusammen mit 6,35 g (0,07 Mol) Butandiol-1,4 in 100 g Toluol vorgelegt und bei 100°C mit 47,5 g (0,19 Mol) Diphenylmethandiisocyanat während 6 Stunden bei kontinuierlicher Zugabe von 655,6 g Toluol umgesetzt. Das NCO : OH-Verhältnis betrug 1,055. Nach dieser Zeit betrug die Viskosität der Reaktionslösung 25 Pa · s/100°C, der Rest-NCO-Gehalt lag bei 0,07%. Durch Zugabe von 9,43 g Bis-aminopropyl-polytetrahydrofuran (MG 1150) und 0,37 g n-Octylamin wurde die Viskosität der 30 gew.-%igen Lösung auf 400 Pa · s/105°C angehoben und der Rest-NCO-Gehalt auf 0% abgesenkt.

Nach Abtrennung des Lösungsmittels bei 120°C unter vermindertem Druck und Wiederauflösen erhält man eine gel- und quellkörperfreie 15prozentige Lösung in Methyläthylketon mit einer Viskosität von 13 Pa · s.

Mit diesem Produkt durchgeführte Verklebungen ergaben folgende Werte:

| Verklebungen (Noratestgummi/Noratestgummi) | Beispiel 5 | Handels- produkt[5) |
|---|---|---|
| Scherfestigkeit nach DIN 53273 (N/cm$^2$) | | |
| ohne Triphenylmethan-triisocyanat | 163 | 170 |
| mit 5% Triphenylmethan-triisocyanat | 194 | 189 |
| Schälfestigkeit nach DIN 53273 (N/cm) | | |
| ohne Triphenylmethan-triisocyanat | 14 | 9 |
| mit 5% Triphenylmethan-triisocyanat | 83 | 72 |
| Viskosität (mPa · s) 15%ig Methyl- äthylketon | 1350 | 875 |
| Offene Zeit (min) | | |
| nach Klebstoffauftrag | 24 | 30 |
| nach Aktivierung | 40 | 65 |
| Aussehen der Lösung | trüb; Bodensatz | trüb; Bodensatz |

[5) Aus Butandiol-1,4-adipat, Butandiol-1,4 und Toluylendiisocyanat.

## Patentansprüche

1. Verfahren zur Herstellung von hochmolekularen in polaren organischen Lösungsmitteln löslichen Polyurethanen aus organischen Diisocyanaten, Dihydroxyverbindungen, Katalysatoren und Zusatzstoffen, dadurch gekennzeichnet, daß man

a) das organische Diisocyanat, die Dihydroxyverbindung und gegebenenfalls das Kettenverlängerungsmittel in einem NCO- : OH-Gruppen-Verhältnis von 1,02 bis 1,18 : 1 in Gegenwart von Katalysatoren und in unter den Reaktionsbedingungen inerten organischen Lösungsmitteln umsetzt, wobei der Reaktionsmischung gegebenenfalls zusätzliches Lösungsmittel einverleibt wird, bis die Reaktionsmischung einen NCO-Gehalt von 0,02 bis 0,2 Gewichtsprozent, bezogen auf das Gesamtgewicht, aufweist,

b) der Reaktionsmischung danach eine Bis-aminopropylpolytetrahydrofuran-Verbindung mit einem Molekulargewicht von 750 bis 2200 in einer solchen Menge einverleibt, daß der Gehalt an Aminogruppen maximal der Menge an Isocyanatgruppen, die am Ende der Reaktionsstufe (a) nicht umgesetzt sind, äquivalent ist,

c) die Reaktionsmischung, in Form einer 30 bis 60 gewichtsprozentigen Lösung bis zu einer Endviskosität von 100 bis 800 Pas, gemessen bei 105° C, kondensiert,

d) gegebenenfalls nach Erreichen der Endviskosität den noch verbleibenden NCO-Gehalt mit einer ungefähr äquivalenten Menge eines Monoamins absättigt, so daß der verbleibende Rest-NCO-Gehalt der Reaktionsmischung 0 bis 0,005 Gew.-% beträgt und

e) das Lösungsmittel in bekannter Weise abtrennt.

2. Verfahren gemäß Anspruch 1, dadurch gekennzeichnet, daß die Bis-aminopropyl-polytetrahydrofuran-Verbindungen portionsweise der Reaktionsmischung einverleibt werden.

## Claims

1. Process für the preparation of high-molecular polyurethanes, which are soluble in polar organic solvents, from organic diisocyanates, dihydroxy compounds, catalysts and additives, characterised in that

11

a) the organic diisocyanate and the dihydroxy compound, with or without the chain extender, are reacted in an NCO- : OH-group ratio of 1.02 to 1.18 : 1 in the presence of catalysts and in organic solvents which are inert under the reaction conditions, with additional solvent being incorporated into the reaction mixture if appropriate, until the reaction mixture has an NCO content of 0,02 to 0,2 per cent by weight, based on the total weight,

b) thereafter a bis-aminopropyl-polytetrahydrofuran compound having a molecular weight of 750 to 2,200 is incorporated into the reaction mixture in such an amount that the content of amino groups is at most equivalent to the amount of isocyanate groups which are unconverted at the end of reaction stage a),

c) the reaction mixture, in the form of a 30 to 60 per cent strength by weight solution, is condensed to a final viscotity of 100 to 800 Pas, measured at 105° C,

d) if appropriate, after the final viscosity has been reached, the NCO content still remaining is neutralised with an approximately equivalent amount of a monoamine, so that the remaining residual NCO content of the reaction mixture is 0 to 0,005% by weight and

e) the solvent is separated off in a known manner.

2. Process according to Claim 1, characterised in that the bis-aminopropyl-polytetrahydrofuran compounds are incorporated into the reaction mixture a little at a time.

## Revendications

1. Procédé de préparation de polyuréthanes de poids moléculaire élevé, solubles dans des solvants organiques polaires, à partir de diisocyanates organiques, de composés dihydroxy, de catalyseurs et d'additifs, caractérisé par le fait que

a) on fait réagir le diisocyanate organique, le composé dihydroxy et, éventuellement, le prolongateur de chaîne, dans un rapport des groupes NCO aux groupes OH de 1,02 à 1,18/1, en présence de catalyseurs et dans un solvant organique, inerte dans les conditions de réaction, au mélange de réaction étant incorporé éventuellement un solvant supplémentaire, jusqu'à ce que le mélange de réaction ait une teneur en NCO de 0,02 à 0,2% en poids, rapportée au poids total.

b) au mélange de réaction est incorporé ensuite un composé bis-aminopropyl-polytétrahydrofuranne d'un poids moléculaire de 750 à 2200, en quantité telle que la teneur en groupes amino soit équivalente au maximum à la quantité de groupes isocyanate qui n'ont pas réagi à la fin du stade de réaction a).

c) on condense le mélange de réaction, sous forme d'une solution à 30 à 60% en poids, jusqu'à une viscosité finale de 100 à 800 Pas, mesurée à 105° C.

d) éventuellement après obtention de la viscosité finale, on sature la teneur en NCO subsistant encore avec und quantité à peu près équivalente d'une monoamine, de façon que la teneur en NCO du reste qui subsiste du mélange de réaction soit de 0 à 0,005% en poids.

e) on sépare le solvant, de manière connue.

2. Procédé selon la revendication 1, caractérisé par le fait qu'on incorpore, par portions, le composé bis-amino-propyl-polytétrahydrofuranne au mélange de réaction.